(19)

Europäisches
Patentamt
European
Patent Office
Office européen
des brevets

(11) **EP 1 382 150 B1**

(12) **EUROPEAN PATENT SPECIFICATION**

(45) Date of publication and mention
of the grant of the patent:
**14.02.2007 Bulletin 2007/07**

(51) Int Cl.:
***H04L 1/18*** (2006.01)

(21) Application number: **02750863.9**

(86) International application number:
**PCT/EP2002/004621**

(22) Date of filing: **26.04.2002**

(87) International publication number:
**WO 2002/091659 (14.11.2002 Gazette 2002/46)**

(54) **REORDERING DATA PACKETS IN A COMMUNICATION SYSTEM**

DATENPAKETUMORDNUNG IN EINEM KOMMUNIKATIONSSYSTEM

PROCEDURE DE REORDONNANCEMENT DE PAQUETS DE DONNEES DANS UN SYSTEME DE COMMUNICATIONS

(84) Designated Contracting States:
**AT BE CH CY DE DK ES FI FR GB GR IE IT LI LU MC NL PT SE TR**

(30) Priority: **27.04.2001 EP 01110485**

(43) Date of publication of application:
**21.01.2004 Bulletin 2004/04**

(73) Proprietor: **TELEFONAKTIEBOLAGET LM ERICSSON (publ)**
**164 83 Stockholm (SE)**

(72) Inventors:
 • **SACHS, Joachim**
   **52074 Aachen (DE)**
 • **PEISA, Janne**
   **FI-02130 Espoonki (FI)**
 • **BEMING, Per**
   **S-113 26 Stockholm (SE)**
 • **TORSNER, Johan**
   **FIN-02600 Espoo (FI)**

 • **WAGER, Stefan**
   **02770 Espoo (DE)**
 • **JOUPPILA, Ari,**
   **02120 Espoo (FI)**

(74) Representative: **Tonscheidt, Andreas**
   **Ericsson GmbH**
   **Ericsson Allee 1**
   **52134 Herzogenrath (DE)**

(56) References cited:
   **WO-A-00/33503         WO-A-00/57594**
   **US-A- 5 754 754**

 • **HARRIS J M ET AL: "ANALYTICAL MODEL FOR RADIO LINK PROTOCOL FOR IS-95 CDMA SYSTEMS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 3 OF 3. CONF. 51, 15 May 2000 (2000-05-15), pages 2434-2438, XP000968441 ISBN: 0-7803-5719-1**

**Description**

**Technical field of the invention**

The present invention relates to a method for data transmission in a communication system. Further the invention relates to a receiver for processing received data transmitted in a communication system.

**Background**

In a communication system with layered protocol stack a protocol layer often handles datagrams, so-called Protocol Data Units PDUs in a sorted way, for example by assigning sequence number to these datagrams. Many link layer mechanisms are fundamentally based on the assumption that datagrams are received at the receiving entity in the same order as they have been sent at the sending entity. Between the layers of the entities a logical communication of the protocols takes place. In this connection it means that the sending protocol sends the data of this protocol to the receiving protocol entity. The entities can for example be implemented in an user equipment or in any network node like an Radio Network Controller RNC or a radio base station of the communication system.

In the following an example of a link layer, the Radio Link Controller RLC is presented and the communication on said RLC between a receiving RLC entity and a sending RLC entity. In the following these entities are called RLC receiver and RLC sender. A detailed description of this protocol is to be found in the 3GPP specification "3G TS 25.322, version 4, Universal Mobile Telecommunication System (UMTS). RLC specification". Said RLC is implemented in the UMTS system, which is based on the WCDMA as a multiple access method and therefore it is often called WCDMA RLC protocol.

In the WCDMA RLC protocol two examples of mechanisms for data transmission are incorporated.

The first mechanism operates in the so-called Acknowledged Mode AM. Here the transmission errors are recovered by applying the Automatic Repeat reQuest ARQ mechanism. The transmission errors are detected by searching for gaps in the sequence numbers of the received PDUs on the receiver side. The requests for retransmission of erroneous packets are denoted with STATUS messages or STATUS reports, which can be triggered by an event like a timer expiry in the receiver, or a request from the sender in form of a STATUS trigger message. For example when PDUs, 3,4,7 are received, it is automatically assumed that PDUs 5,6 have been lost due to transmission errors. The reaction of the RLC receiver in acknowledged mode is to request the retransmissions for the assumedly lost PDUs. This can be achieved by sending a STATUS report, which acknowledges 3,4,7 and request the retransmission of 5 and 6. However if PDUs 5,6 have all been transmitted correctly and have only been reordered by the link the protocol will fail to work well, because unnecessary retransmissions are to be performed.

The second mechanism for data transmission operates in Unacknowledged Mode UM. It means no error recovery is performed on the link layer and in-sequence delivery is provided to a higher layer. In this case the receiving protocol entity discards any PDU with a sequence number smaller than the next expected PDU n. The next expected sequence number n is stored in "3G TS 25.322, version 4, Universal Mobile Telecommunication System (UMTS). RLC specification" in the state variable VR(H). If a PDU with a sequence number x is received, wherein x is higher than n, n is set to n:=x+1. In the Unacknowledged Mode UM, if reordered packets are received, this leads to a loss of the correctly transmitted packets. For example if the PDUs 3,4,5,6,7 are received as 7,3,4,5,6 all the PDUs 3,4,5,6, are discarded since the next expected PDU after 7 is 8.

In Harris I M etal:"Analytical Model for Radio Link Protocol for IS-95 CDMA Systems" VTC 2000-Spring. 2000 IEEE 51ST a mechanism for in-sequence delivery of RLP data to upper layer is disclosed. In case a RLP data packet is delivered out of order to the RLP receiver, immediately a reordering procedure is started by means of sending back a NACK data packet to the sender, requesting retransmission of the lost data packet. Additionally to the initiation of the reordering procedure a NACK timer is started, which supervises the correct receipt of the lost data packet. When said timer expires another NACK is sent in order to guarantee the retransmission of the lost data packet. Therefore in this solution the out-of-order delivery is immediately rated as packet losing, although it might happen that the data packet would arrive later due to some link interference, however the packet retransmission had been already started for the later received packet.

In the following some aspects of the UMTS network in view of the present invention are described.

An user equipment UE of a mobile user communicates over a radio interface, the so-called Uu interface with a Node B, which is a base station. Said Node B is connected via the Iub interface with a Radio Network Controller RNC, which communicates over the Iu interface with a corresponding node in the core network.

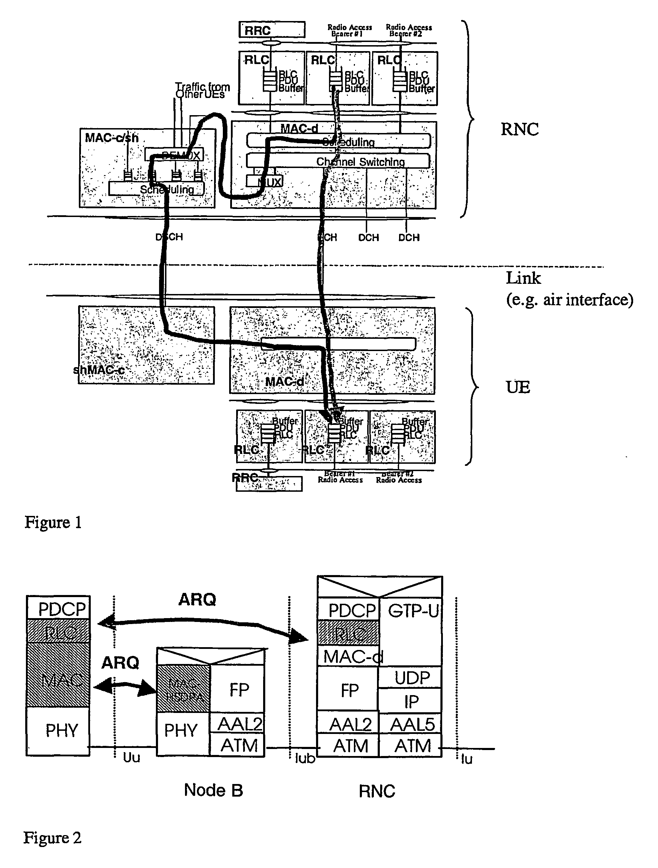

The network nodes include protocol stacks consisting of protocol layers, which communicate with the corresponding protocol layer of the peer-communicating node. Such protocol architecture is shown in figure 2. Figure 2 shows a protocol stack of an UE including a physical layer PHY, a MAC (Medium Access Control) layer, a RLC (Radio Link Control) and a PDCP (Packet Data Convergence Protocol) layer. The layers located above the PDCP are not described in the following. The UE is connected to the Node B, which communicates with the RNC. The arrows with ARQ indicate the logical connection of the corresponding protocol layers, whereby the connections apply the ARQ mechanism. For example between the Node B and the UE an ARQ mechanism is integrated into the logical communication between the MAC layers. Between the UE and the RNC it is integrated into the logical communication between the RLC protocols.

In the following some of the protocols on the sender side like for example the UE, are described in more details.

The PDCP is used for IP header compression. The RLC provides mechanisms for an established call, like for example buffer, segmentation, retransmission for incorrect received data packets. The MAC layer is responsible for the mapping of the logical channels to the transport channels, which comprises multiplexing and mapping of the logical channels onto transport channels as well as the switching between the available transport channels. Further the MAC layer performs an addressing on common channels.

The UMTS distinguishes between different logical channels according to the carried information, like user or control information. The user information is transported over traffic channels, which are subdivided into Dedicated Traffic Channels DTCH and Common Traffic Channels CTCH. A DTCH is assigned to one user equipment. In contrast thereto, a CTCH is assigned to a group of user.

Beside the logical channels the UMTS has also transport channels, which are defined between the MAC layer and the physical layer. The transport channels define the manner of the information transport, for example which coding is to be used. Among the transport channels a difference is made between the exclusively assigned channels, the so-called Dedicated Channels DCH and the so-called Common Channels CCH. The DCH channels are used on both the uplink and the downlink direction. A DCH is exclusively assigned to a user for a transmission, and the stability of said channel is permanently controlled during a transmission so as to guarantee a quality of the radio transmission as constant as possible. This means, an exclusive assignment of the radio resources to a user takes place during a transmission. In contrast thereto, the radio resources are shared between the different users as far as the CCH channels are concerned.

When using the so-called Downlink Shared Channel DSCH, the user data may additionally be transmitted on an exclusively dedicated channel, the DCH.

In respect to figure 2 in Node B there is a MAC-HSDPA (High Speed Downlink Packet Access). This concept is introduced in order to improve the radio link performance, because special the radio link is very sensitive to errors. The MAC-HSDPA concept enables also higher data rates, for example by means of a new modulation on the physical layer and by means of a hybrid ARQ between a mobile station and a base station.

On the basis of the presented background information in the following the reordering of data packets on the RLC layer is described in more details.

There are cases when an underlying radio link leads to reordering of correctly transmitted packets.

In case of parallel transmission of data on two channels, for example on a DSCH and on a DCH, the data transmission can take different time. The reason can be for example the different Transmission Time Interval TTI on every channel, or the additional MAC queuing or the different data rates. Consequently data on one link can overtake data on the other link. The DSCH can be either an ordinary DSCH or the high speed DSCH of HSDPA.

The problem of different data transmission on different channels is shown in respect to figure 1. In figure 1 an UE and a RNC is depicted. In both entities a Radio Resource Controller RRC is provided to control the RLC connections. In respect to figure 1 there are three RLC logical connections that are mapped in the RNC on the MAC layer onto transport channel. In the UE the MAC layer maps the data received from the transport channels onto logical channels of the RLC layer. Figure 1 shows two different MAC instances, the MAC-d and MAC-c/sh. Inter alia responsibilities, the MAC-d administrates the mapping of the RLC frames, PDUs, on the dedicated channels DCH. The MAC-c/sh is responsible for the mapping on channels, like for example the dedicated shared channels DSCH or FACH. Respectively in UE on the MAC-c/sh the mapping of the on the DSCH received data packets to logical channels is made and on the MAC-d of the data received on the DCH, which are thereafter delivered to the RLC. The two arrows show the different way of the data packets being sent from one RLC buffer. One part of the data packets is transferred over the DCH and the other over the DSCH. In respect to figure 1 the path on DSCH has an additional queuing delay in MAC-c/sh. Additional it can also have different TTI. Consequently the transmission time via the DSCH and DCH can be different. Therefore the data packets arrive at different time at the receiver. This leads to the reordering of the sent sequence at the receiver.

Another example showing the cause of changing the order of the data packets is the ARQ mechanism integrated in HSDPA as shown in the above-described figure 2. Said ARQ mechanism between the MAC layers was developed in order to improve the error rate on the radio interface. Additionally there is still the ARQ mechanism integrated into the RLC communication. The problem is that both ARQ mechanisms are competitive to each other. It means in case a data packet is lost on the radio link the HSDPA ARQ performs retransmissions. Due to the performed retransmission the data packets are delivered to the receiver correctly, but delayed. This may lead to the reordering of the data packets on the RLC layer. In the meantime the RLC at the RNC has already triggered the retransmission of the missing data packets in case of the acknowledged mode. This leads to the spurious performed retransmissions. In case of the unacknowledged mode the out of order received data packets are discarded.

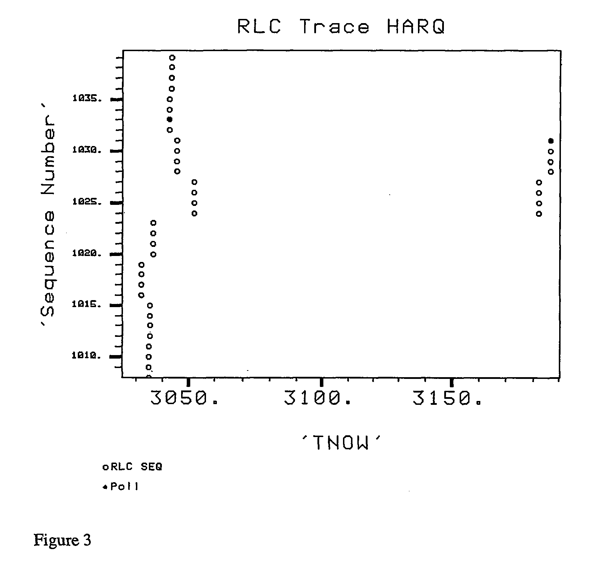

The reaction of the RLC receiver with an underlying HSDPA is depicted in respect to figure 3. The x-axis shows the time and the y-axis the sequence number of the packet received at the receiver on the RLC layer. For example at 3030 the PDUs with sequence number 1016 to 1019 and at 3035 the PDUs 1008 to 1015 were received. As reaction to the reception of the PDU with the sequence number 1033 the RLC causes an unnecessary retransmission of the eight PDUs 1024 to 1031 in acknowledged mode. The retransmission is triggered because of the set pool bit, which forces sending of a STATUS report to the sender and because the receiver recognises the gap in the received PDUs, it means it recognises that PDUs 1024 to 1031 are not received yet. With sending the STATUS report the retransmission of the missing PDUs is requested. Due to the retransmissions on the MAC-HSDPA layer the missing PDUs are received delayed, at the time 3045 and 3050. Nevertheless they are also unnecessary received at the time points 3180 and 3185 due to the requested retransmission.

In unacknowledged mode PDUs 1008-1015 and PDUs 1024-1031 would be discarded in RLC receiver unnecessarily since they are received in the RLC receiver out-of-sequence.

If the above described two cases are combined together, it means in case of having a link protocol based on the assumption that data is transmitted and received over the link in the same order, like the WCDMA RLC and in case of having a link that can have to reorder the packets, like WCDMA HSDPA and DCH/DSCH it even leads to malfunctioning of the link protocol and therefore to an inefficient utilisation of the link due to the spurious retransmissions.

## Summary and description of the invention

It is an object of the present invention to provide a solution for an efficient data transmission. In particular it is the object of the present invention to avoid spurious retransmissions.

The invention is embodied in a method and a receiver as disclosed in claims 1, 14. Advantageous embodiments are described in the dependent claims.

The basic idea for the purpose of provisioning an efficient data transmission in a communication system with a receiving entity and a sending entity, wherein the sending entity provides the data for the transmission as a sequence of data packets in order, is to delay the triggering of a reordering procedure for providing the sequence at the receiver by means of a delay parameter, in case the receiver entity receives a data packet being out of the sequence order. The establishment of the sequence order of the data packets incoming during the duration of the delay is controlled by means of a controlling parameter.

The advantage of the invention is to make a receiving entity robust against re-ordering on the link. For WCDMA this avoids destructive interactions between the RLC and the MAC-HSDPA when transmitting via HSDPA. Further for the WCDMA this allows to use the DSCH in combination with the associated DCH.

In a preferred embodiment of the invention the delay parameter is a timer that is started for every data packets arriving out of sequence, and the triggering of the reordering procedure for providing the sequence at the receiver is delayed by the duration of the timer. Besides it is also possible to introduce for example an event counter as a delay parameter.

With the delay parameter like the timer the discarding of the data packets, which have been received out of order is delayed. This is preferably to be applied when data transmission is performed in an unacknowledged mode.

In acknowledged mode of a data transmission it is advantageous to delay a request for a retransmission of missing data packets by the timer.

It is preferable to request the retransmission for the missing data packets after the timer expiries. With this solution it is guaranteed that during the duration of the timer no retransmission is performed for the data packets, which possibly will arrive in this time interval.

In a preferred embodiment the timer is stopped before the timer expiry when at the reception of a data packet the sequence is established. In this embodiment the undesired effect is avoided, in which the sending entity waits until the timer expires for an acknowledgment from the receiving entity that data packets are received correctly.

In a further embodiment the controlling parameter is at least one state variable that is used to track the reordering procedure. The state variable is preferable used when the reordering of the data packets occurs frequently and therefore the usage of a timer is not sufficient.

This state variable is set to the maximum sequence number of the received data packet when at the reception of a data packet being out of the sequence order the timer is not running. During the duration of the timer this state variable is not updated. This simplifies the administration of the state variable.

Preferably at the reception of a data packet and in case the timer is running the state variable is updated so that the state variable indicates the data packets upto which the data packets are in the sequence order from the time the timer was started. With this solution a more precise tracking of the reordering is achieved.

The status variable can be for example used in acknowledged mode for a generation of a status report message to acknowledge the reception of the data packets upto the state variable. Said status report message is sent to the sender in order to acknowledge the correct received data packets so that the receiver can delete these data packets from the buffer. Said status report message can also report the data packets, which are not received until generation of the status report message so that a retransmission of these data packets is triggered.

The status report can be sent after the timer expires or after the timer is stopped. The status report can also be sent during the duration of the timer.

In a preferred embodiment the state variable is used to the delivery the data packets being in the correct sequence order to a protocol layer being located above the protocol layer, in which the sequence has been established. This embodiment is to be applied in the acknowledged and in the unacknowledged mode. When in case of the unacknowledged mode the sequence order is not established during the duration of the delay timer the received data packets are discarded.

Further the invention relates to a receiver adapted to perform data transmission in a communication system with a receiving entity integrated in the receiver and a sending entity, wherein the sending entity provides the data for the transmission as an in order sequence of data packets. The receiving entity has a delay parameter for delaying the triggering of a reordering procedure for providing the sequence at the receiver at the reception of a data packet being out of the sequence order and the receiving entity has a controlling parameter for controlling an establishment of the sequence order of the data packets incoming during the duration of the delay.

In the following a detailed description of the invention is given.

Fig.1:    Protocol architecture of RNC and UE and data transmission paths via DCH and DSCH,
Fig.2:    Architecture of HSDPA with two competing retransmission protocols,
Fig.3:    RLC trace for MAC-HSDPA,
Fig.4:    An embodiment of the invention by applying the timer T_reorder,
Fig.5:    An embodiment of the invention by applying the timer T_reorder and a stop timer event,
Fig.6:    Operations for algorithm A,
Fig.7:    Operations for algorithm B,
Fig.8:    Operations for algorithm C,

The basic idea of the present invention is to delay all mechanisms on the link layer, which exploit in-sequence reception by a certain time, which allows receiving all re-ordered packets and putting them back in the sent sequence. Said reorder-delay shall be as small as possible but not smaller than the reordering depth of the link, which is the interval between the reordered incoming data packets. Further the establishing of the sent sequence of the data packets at the receiver side is performed by means of a controlling parameter.

In the following two embodiment of the invention are presented.

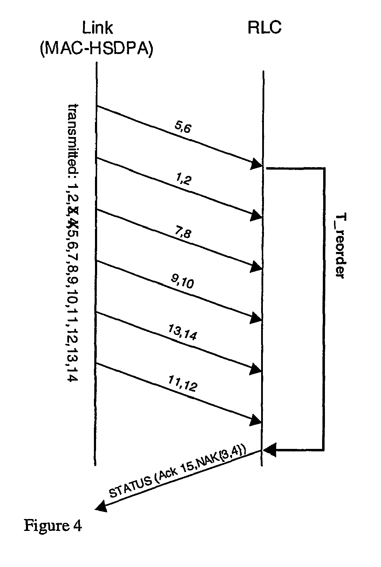

In the first embodiment a reorder delay timer, T_reorder is introduced in order to delay the reaction of the RLC receiver in sending a STATUS report, which triggers also the retransmissions. This embodiment is described in respect to figure 4. It shows RLC receiver, RLC and a link with the integrated MAC-HSDPA layer, Link (MAC-HSDPA). On the left side the sequence of the transmitted PDUs is shown, whereby the PDUs 3 and 4 are not transmitted correctly. The arrows represent the receiving sequence at the RLC receiver depending on time. It means at first the PDUs 5 and 6 are received, followed by the PDUs 1 and 2 and so on. On the right side the duration of the reorder-delay timer, T_reorder is shown. The reorder-delay timer is started for each PDU arriving out of sequence. In respect to figure 4 the T-reorder timer is started by receiving the PDUs with the number 5 and 6, because actually the PDUs 1 and 2 are expected. With starting the T_reorder the reaction of the RLC receiver is delayed until no more packets are reordered. In this case it means until the maximum delay is reached, which is registered with expiring of the set T_reorder timer.

In the unacknowledged mode the T_reorder timer is started for a PDU arriving out of the sequence order. The discarding of any missing PDUs with sequence numbers smaller than the received PDU is delayed until T_reorder is expired. Consequently the delivery of the data packets to the higher layer is delayed. It is matter of course, that more than one timer can be started.

In case of acknowledged mode AM the triggering of the retransmission is delayed. A STATUS report including the request for missing PDUs is sent to the sender and this triggers the retransmission. Said request has a form of a negative acknowledgment NACK for the missing PDUs. In case a PDU is received out of order a STATUS report including NACKs is placed in a buffer and T_reorder is started. While being buffered, the STATUS report is updated, when PDUs are received filling the gaps in the sequence of the PDUs. Also PDUs that are received in-sequence after the highest PDU is acknowledged in the STATUS report may be added to the STATUS report. Once T_reorder expires, the STATUS report is removed from the buffer and transmitted. At the expiry of the T_reorder the STATUS triggers are to be verified in order to sent an appropriate answer message to the sender.

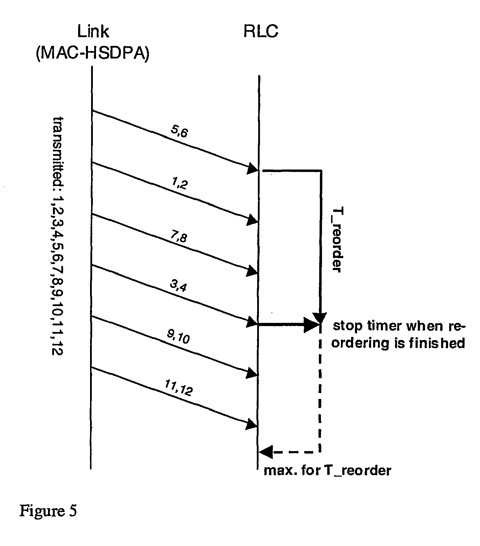

In order to achieve a minimum reaction time of the link protocol, the reodering-delay shall preferably be stopped when a11 outstanding PDUs are received and the sent sequence is re-established. This is can be achieved by stopping the duration of the T_reorder timer, when reordering is finished. This embodiment is shown in figure 5. The structure of the figure 5 is similar to the figure 4. The difference is that the PDUs 3 and 4 are transmitted over the link. By receiving the PDUs 5 and 6 the RLC receiver notices, that they are out of order, and the T_reorder timer is started. After receiving the PDUs 3 and 4 the sequence 1,2,3,4,5,6,7,8 is re-established and therefore the T_reorder timer is stopped.

Although the previously mentioned scheme reduces the undesired effects of packet re-ordering, it can be shown that these effects are not completely avoided. When the reorder of the data packets occur regularly it leads to high delays in responding to the sender. However if packet re-ordering occurs infrequently the previous scheme may be already sufficient.

To completely solve the problem of packet re-ordering the previous scheme can be improved by adding at least one additional state variable in the receiver. Four different implementations are suggested in the following. The algorithms A and B use one additional state variable. The algorithm B also stops the timer when all received PDUs are in-sequence, like it was described above. The algorithm C uses two state variables. The algorithm D is a simplification of the algorithm A.

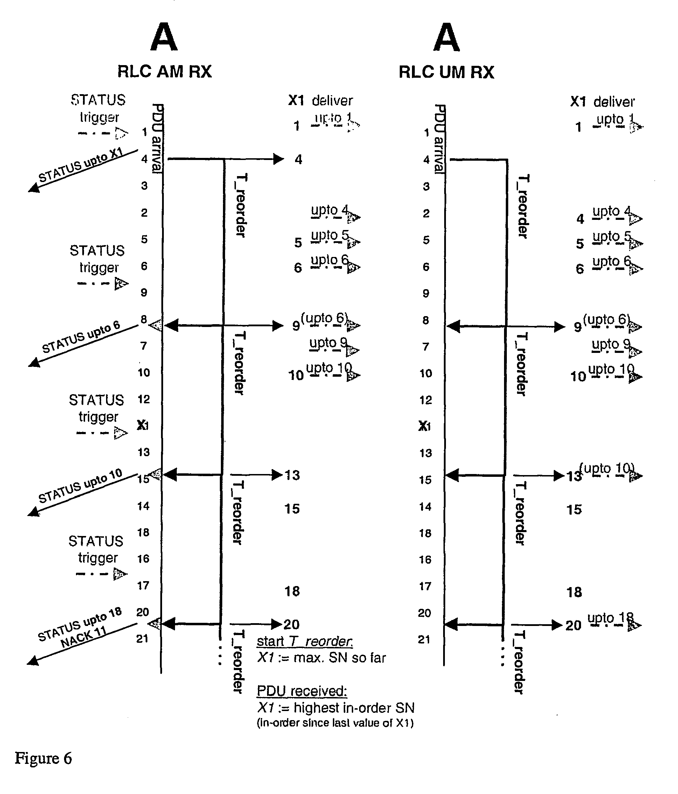

The algorithm A is described in the following in respect to figure 6. The figure 6 shows the RLC receiver working in the acknowledged mode, RLC AM RX shown in the left drawing and in the unacknowledged mode, RLC UM RX shown in the right drawing. The difference between the two modes is indicated in the STATUS messages being integrated in the acknowledged mode. The STATUS triggers are depicted in figure 6 as dotted arrows on the left side. Said triggers can either be sent from the sender or they can be generated locally in the receiver. The receiver answers to the STATUS trigger with STATUS report carrying the positive acknowledgments for the positive received PDUs and/or negative acknowledgments for the missing PDUs. On the vertical line, PDU arrival, the sequence of the received PDUs is shown, whereby the time runs from the top to the bottom of the line. It means at first the PDU 1 is received and after that PDU 4. On the right side of the PDU arrival line the duration of the T_reorder timer is shown and the current value of a state variable X1.

In the following the setting of the X1 state variable is described. Whenever new PDUs are received in the RLC receiver buffer such that a block of in-sequence PDUs starting at the current value of X1 is formed, X1 is set to the largest sequence number of this block. In respect to figure 6 X1 is initially set to 1. In the next step PDU 4 is received, which is out of order. In this case T_reorder timer is started and X1 is set to the largest sequence number of the received PDUs, thus X1 is set to 4. When the T_reorder timer is active, the X1 is not updated, whenever a PDU with a sequence number smaller then actual X1 value arrives. Thus X1 does not change after receiving PDU 2 and 3, the PDUs 2and 3 are only brought to the right position in the sequence. When a PDU is received which is in-of-sequence since the value of X1 and which is higher then X1, at this moment X1 is set to the highest sequence number of PDUs received so far. It means X1 is for example updated to 5 by the reception of the PDU 5. Whenever the sequence of the PDUs in the RLC receiver buffer is re-established, all in-sequence PDUs from beginning of the buffer are delivered to the higher layer and removed from the receiver buffer.

In acknowledged mode, the STATUS trigger only leads to an instantaneous transmission of a STATUS message when no T_reorder is active. If T_reorder is active, the received STATUS trigger is stored and the STATUS report is delayed until the expiry of T_reorder. The STATUS message reports only sequence numbers up to X1. If there are outstanding PDUs with sequence number higher than X1 at transmission of the STATUS message, T_reorder is re-started and X1 is set to the highest sequence number of PDUs received so far. Said highest number can be delivered from the VR_H variable, which in the RLC receiver points to the sequence number of the highest received PDU plus one, as described in "3G TS 25.322, version 4, Universal Mobile Telecommunication System (UMTS). RLC specification". In respect to the figure 6 at the time of the expiry of the first T-reorder timer a STATUS message is generated. At this time X1 has the value 6, which means that upto 6 all PDUs are reported, this information is also sent to the sender. By receiving the PDU 8 a new T_reorder timer is started and X1 is set to 9, because this is the highest sequence number of PDUs received so far. In case a PDU is lost, in figure 6 it is the PDU 11, than according to the invention the sending of the STATUS report indicating the missing PDU by means of a NACK is delayed. It means the NACK 11 is included in the STATUS report upto 18.

In unacknowledged mode packets of a higher layer in the protocol stack are delivered to the higher layer up to a sequence number for which all PDUs in the receiver buffer are in-sequence, even when T_reorder timer is active. If T_reorder timer expires packets to a higher layer can be delivered for sequence numbers up to X1, as it is depicted in figure 6, the right drawing.

The advantage of algorithm A, which has beside the T_reorder timer additional also the state variable X1 is the delayed sending of the STATUS reports. The T_reorder timer delays the STATUS message. X1 variable is used to track the reordered sequence of the data packets. This can be used to inform the receiver, which PDUs are received correctly and, so that the sender can drop these PDU from the sender buffer.

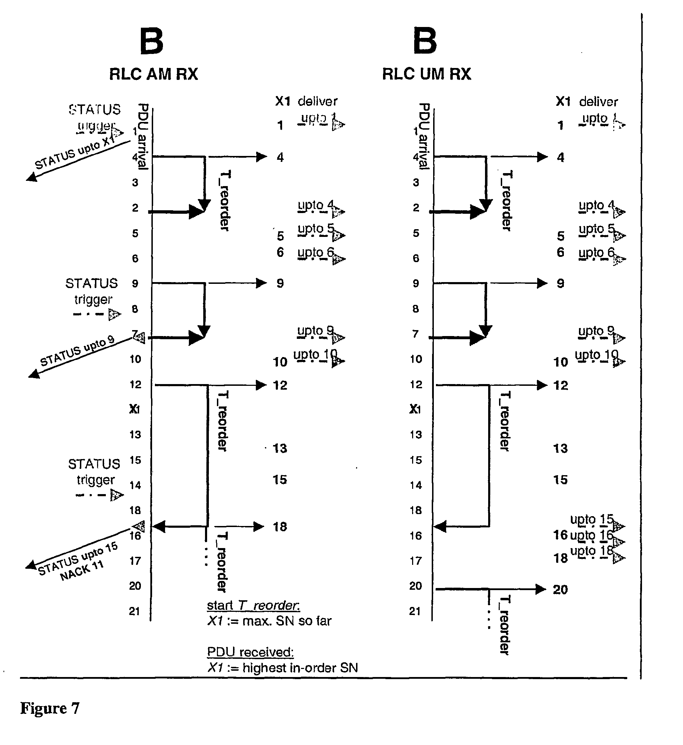

In the following the algorithm B in respect to the figure 7 is described.

The structure of figure 7 corresponds to figure 6. The difference is the duration of the T_reorder timer. Said timer is stopped when on reception of a PDU all PDUs in the receiver buffer has been received in-sequence up to X1. The STATUS reports for a STATUS triggers received during T_reorder are sent when T_reorder is stopped. In respect to figure 7 the T_reorder timer is started with the out of order received PDU 4. After reception of the PDUs 3 and 2 the said timer is stopped, because the sequence of the PDUs until 4 is re-established. With the stopping of the timer a faster reaction of the link layer is achieved. The T_reorder reaches the maximal set duration value, when a PDU is lost during the transmission. This is shown in figure 7 by indicating the PDU 11 as lost. In this case the T_reorder lasts the whole set duration. However the reaction for informing the sender about the lost data packets is faster in comparison to the algorithm A. The STATUS report upto 15 carries already the NACK 11, which means that a retransmission for PDU 11 is required.

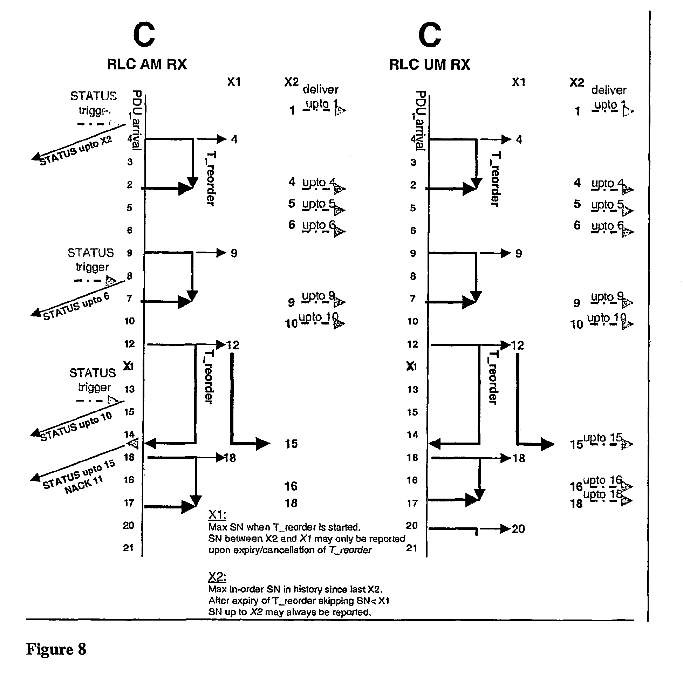

In the following the algorithm C in respect to the figure 8 is described.

The algorithm C maintains two state variables, the state variable X1 and X2. The variable X2 keeps track of up to which sequence number re-ordering can be excluded, it means that the PDUs received up to X1 are in-sequence. The variable X1 considers the T_reorder timer and it defines a differentiator between PDUs being re-ordered and PDUs being lost. When T_reorder is started the state variable X1 is set to the highest sequence number so far received for this link. When a PDU is received the X2 can be changed, it is set to the largest sequence number of a block having all PDU in the correct order. In respect to figure 8 by receiving the PDU with the number 5 the value X2 is changed to 5, because all the PDUs upto 5 are in-sequence. When the T_reorder expires then X2 is set to the largest in-sequence sequence number being in the receiver buffer starting from X1. In figure 8 by expiring of the timer X1 is set to 15. Unless already active, the timer T_reorder is started when a PDU is received which is out-of-sequence since the value of X2. At this moment X1 is set to the highest sequence number of PDUs received so far. In the figure 8 the variable X1 is set to 18.

The algorithm C allows to send STATUS reports even when T_reorder is active. However the PDUs with a sequence number being between X1 and X2 are only reported, when T_reorder expires or when it is cancelled.

In acknowledged mode, a STATUS trigger may lead to an instantaneous transmission of a STATUS message upto and including X2 even if T_reorder is active. If the STATUS trigger is sent to the receiver with the request for a complete STATUS report, then a second STATUS report shall be transmitted once T_reorder expires, covering PDUs from X2 upto VR(H) - 1. In figure 8 X2 is equal to VR(H) - 1, which is 15.

The decision whether or not to perform the instantaneous STATUS report transmission while T_reorder is running is a tradeoff between delay performance and link efficiency that includes the following considerations. If the STATUS trigger occurs close to expiry of T_reorder, it may be beneficial to wait with the STATUS report until T_reorder expires to reduce the amount of STATUS reports. For the STATUS reports transmitted when T_reorder expires, the preferred option is to exclude all PDUs, which have been reported in the STATUS report while T_reorder was active to avoid unnecessary retransmissions. This requires that the RLC implements partial STATUS reports.

In unacknowledged mode, a data packet of a higher protocol layer can always be delivered and deleted from the receiver buffer but only up to X2.

While T_reorder is active, it is stopped when upon reception of a PDU, all PDUs in the receiver buffer are in-sequence up to X2. If STATUS triggers have been received during T_reorder, STATUS reports for are created and sent to the sender. It is preferable that these STATUS reports exclude PDUs which have already been reported during the activity of T_reorder.

In a further embodiment of the invention the algorithm A is simplified. For the reason of the simplification no update of the X1 variable is performed. In the following this algorithm is called algorithm D. In comparison to the figure 6 the X1 variable is set when an out of order PDU is received and when the t_reorder timer expires. During the activation of the T_reorder no update of X1 is made. The advantage of this embodiment is a lower administration of the state variable. However the drawback is that the sender gets a more delayed feedback about the correct received PDUs from the receiver and therefore the buffer at the sender side is updated rare than in algorithm A. After expiring of the first timer the STATUS report upto 4 is sent to the sender. In algorithm A the STATUS report includes the acknowledgment upto 6.

The selection of the appropriate algorithm is to be made according the requirements on the data transmission. The advantage of algorithms B and C over the algorithm A is that they react faster since T_reorder is stopped earlier and does not delay protocol reactions so much. The advantage of algorithm C over algorithm B is that it allows protocol reactions for a subset of the received PDUs also while T_reorder is active. It is therefore faster. Algorithm C is in particular useful when combined with partial STATUS reporting. The algortihm D is a simplified solution to the problem, although not as efficient as algorithms A to C.

Further the selection of the T_reorder timer depends on the to be applied method. The timer setting of T_reorder is a trade-off between the link layer performance and the link layer efficiency. If T_reorder is larger than the maximum reordering delay, the so-called T_max, of the link, all protocol interactions due to packet reordering are eliminated. If T_reorder is smaller than the maximum reordering delay all packet reorderings, which are longer than T_reorder will lead to undesired interactions. However the delay due to T_reorder is reduced.

The best solution is to adapt the T_reorder timer to the requirements of the service or system situation, like for example in dependence on the currently available link or on the battery power. It means it can be decided to set the T_reorder smaller than T_max for a link with a traffic that are to be optimised according to the delay. Another value is to be selected for T_reorder for a link that shall be resource optimised. However the timer setting for T_reorder is related to the maximum reordering delay T_max. In the following the estimation of T_max is described.

If T_max is already known it can be signalled to or stored in the link layer. In general T_max should be smaller than the round-trip time (RTT) of the link. If T_max is not known it can be estimated during the transmission. Assuming that an estimation of the RTT is available, then T_max can be estimated as the maximum of the reordering delays measured on the link which are smaller than RTT, Tmax_est.

$$Tmax\_est=Max\{ Min\{RTT, reordering\ delays\ measured\ on\ link\}\}$$

Tmax_est becomes more precise, the longer the measurements are carried out. Some smoothing function could be applied on the estimates, like for example a moving average. Reordering delays can easily be obtained as the updating interval of state variable X1 in algorithms A, B or the updating interval of state variable X2 in algorithm C. As an initial value for Tmax_est a progressive value could be 0 or as a conservative value could be RTT. All values in the interval [0, RTT] seem to be a reasonable choice.

According to the current situation the STATUS reports are sent as an answer for a received STATUS trigger. With the present invention the STATUS reports can also be sent without expecting the STATUS trigger.

Further in the description of this invention it is assumed that sequence numbers of the RLC protocol constantly increase for each new RLC PDU. In reality there is a limit of a maximum sequence number and a modulus operation is performed on the number of the available sequence numbers. In case of an implementation of the algorithms described above, this needs to be taken into consideration.

The solution covered in this invention focuses on the WDCDMA. In general, the idea can be applied whenever reordering of the data packets occur below a protocol implementing retransmissions. By applying the invention destructive interaction of the protocols are avoided.

**Claims**

1. Method for data transmission in a communication system with a receiving entity (UE, RNC) and a sending entity (RNC, UE), wherein the sending entity provides the data for the transmission as a sequence of data packets in order and wherein the receiving entity at the reception of a data packet being out of the sequence order starts a reordering procedure for providing the sequence of data packets in order at the receiver by means of sending a request for resending a lost data packet
   **characterised in that**
   the receiver entity (UE, RNC)) at the reception of a data packet being out of the sequence order delays the triggering of the reordering procedure for providing the sequence at the receiver by means of a delay parameter (T_reorder) with a timer or a counter that is activated for every data packet arriving out of sequence, whereby the triggering of the reordering procedure for providing the sequence at the receiver is delayed by the duration of a delay parameter (T_reorder) and whereby an establishment of the sequence order of the data packets incoming during the duration of the delay is controlled by means of a controlling parameter (X1, X2).

2. Method according to claim 1 **characterised in that** the delay parameter is a timer that is started for every data packets arriving out of sequence, and the triggering of the reordering procedure for providing the sequence at the receiver is delayed by the duration of the timer.

3. Method according to claim 1 or 2 **characterised in that** the discarding of the data packets, which have been received out of order, is delayed by the timer.

4. Method according to one of the claims 1 to 3 **characterised in that** a request for a retransmission of missing data packets is delayed by the timer.

5. Method according to claim 4 **characterised in that** the request of the retransmission for the missing data packets is sent after the timer expiries.

6. Method according to one of the claims 1 to 4 **characterised in that** the timer is stopped before the timer expiry when at the reception of a data packet the sequence is established.

7. Method according to one of the claims 1 to 6 **characterised in that** the controlling parameter is at least one state variable that is used to track the reordering procedure.

8. Method according to one of the claims 1 to 7 **characterised in that** at the reception of a data packet being out of the sequence order and in case the timer is not running the state variable is set to the maximum sequence number of the received data packet.

9. Method according to one of the claims 1 to 8 **characterised in that** at the reception of a data packet and in case the timer is running the state variable is updated so that the state variable indicates the data packets upto which the data packets are in the sequence order from the time the timer was started.

10. Method according to one of the claims 7 to 9 **characterised in that** the state variable is used for a generation of a status report message to acknowledge the reception of the data packets upto the state variable.

11. Method according to one of the claims 1 to 10 **characterised in that** the status report is sent after the timer expires or is cancelled.

12. Method according to one of the claims 1 to 10 **characterised in that** the status report is sent during the duration of the timer.

13. Method according to one of the claims 7 to 9 **characterised in that** the state variable is used for the delivery of the data packets being in the correct sequence order to a protocol layer being located above a protocol layer, in which the sequence has been established.

14. Receiver adapted to perform data transmission in a communication system with a receiving entity (UE, RNC) integrated in the receiver and a sending entity (RNC, UE), wherein the sending entity provides the data for the transmission as a sequence of data packets in order and wherein the receiving entity at the reception of a data packet being out of the sequence order starts a reordering procedure for providing the sequence of data packets in order at the receiver by means of sending a request for resending a lost data packet
**characterised in that**
the receiver entity (UE, RNC) has a delay parameter (T_reorder) for delaying the triggering of the reordering procedure for providing the sequence at the receiver at the reception of a data packet being out of the sequence order by the duration of the delay parameter wherein a timer or a counter (T_reorder) is activated for every data packet arriving out of sequence and the receiver entity has a controlling parameter (X1, X2) for controlling an establishment of the sequence order of the data packets incoming during the duration of the delay.

**Patentansprüche**

1. Verfahren zur Datenübertragung in einem Kommunikationssystem mit einer Empfangsentität (UE, RNC) und einer Sendeentität (RNC, UE), wobei die Sendeentität die Daten für die Übertragung als eine geordnete Reihenfolge von Datenpaketen bereitstellt, und wobei die Empfangsentität beim Empfang eines Datenpaketes, das sich außerhalb der Reihenfolge befindet, ein Umordnungsverfahren beginnt, um die geordnete Reihenfolge von Datenpaketen im Empfänger mittels Versenden einer Anforderung für das erneute Senden eines verlorenen Datenpaketes bereitzustellen,
**dadurch gekennzeichnet, dass**
die Empfängerentität (UE, RNC) beim Empfang eines Datenpaketes, das sich außerhalb der Reihenfolge befindet, das Auslösen des Umordnungsverfahrens zum Bereitstellen der Reihenfolge in dem Empfänger mittels eines Verzögerungsparameters (T_reorder) mit einem Timer oder einem Zähler verzögert, der für jedes Datenpaket aktiviert wird, das außerhalb der Reihenfolge eintrifft, wobei das Auslösen des Umordnungsverfahrens zum Bereitstellen der Reihenfolge in dem Empfänger um die Dauer des Verzögerungsparameters (T_reorder) verzögert wird und wobei ein Herstellen der Reihenfolge der Datenpakete, die während der Dauer der Verzögerung eintreffen, mittels eines Steuerparameters (X1, X2) gesteuert wird.

2. Verfahren nach Anspruch 1, **dadurch gekennzeichnet, dass** der Verzögerungsparameter ein Timer ist, der für alle Datenpakete gestartet wird, die außerhalb der Reihenfolge eintreffen, und das Auslösen des Umordnungsverfahrens zum Bereitstellen der Reihenfolge in dem Empfänger um die Dauer des Timers verzögert wird.

3. Verfahren nach Anspruch 1 oder 2, **dadurch gekennzeichnet, dass** das Verwerfen der Datenpakete, die außerhalb der Reihenfolge empfangen wurden, durch den Timer verzögert wird.

**4.** Verfahren nach einem der Ansprüche 1 bis 3, **dadurch gekennzeichnet, dass** eine Anforderung für eine Neuübertragung fehlender Datenpakete durch den Timer verzögert wird.

**5.** Verfahren nach Anspruch 4, **dadurch gekennzeichnet, dass** die Anforderung der Neuübertragung für die fehlenden Datenpakete nach dem Ablauf des Timers versendet wird.

**6.** Verfahren nach einem der Ansprüche 1 bis 4, **dadurch gekennzeichnet, dass** der Timer vor dem Ablaufen des Timers angehalten wird, wenn bei Empfang eines Datenpaketes die Reihenfolge hergestellt ist.

**7.** Verfahren nach einem der Ansprüche 1 bis 6, **dadurch gekennzeichnet, dass** der Steuerparameter wenigstens eine Statusvariable ist, die zum Verfolgen des Umordnungsverfahrens verwendet wird.

**8.** Verfahren nach einem der Ansprüche 1 bis 7, **dadurch gekennzeichnet, dass** beim Empfang eines Datenpaketes, das sich außerhalb der Reihenfolge befindet, und in dem Fall, dass der Timer nicht läuft, die Statusvariable auf die größte laufende Nummer des empfangenen Datenpaketes eingestellt wird.

**9.** Verfahren nach einem der Ansprüche 1 bis 8, **dadurch gekennzeichnet, dass** beim Empfang eines Datenpaketes und in dem Fall, dass der Timer läuft, die Statusvariable aktualisiert wird, so dass die Statusvariable die Datenpakete anzeigt, bis zu denen die Datenpakete ab dem Zeitpunkt des Timer-Starts in der Reihenfolge sind.

**10.** Verfahren nach einem der Ansprüche 7 bis 9, **dadurch gekennzeichnet, dass** die Statusvariable zum Erzeugen einer Statusberichtsmeldung benutzt wird, um den Empfang der Datenpakete bis zu der Statusvariable zu bestätigen.

**11.** Verfahren nach einem der Ansprüche 1 bis 10, **dadurch gekennzeichnet, dass** der Statusbericht versendet wird, nachdem der Timer abgelaufen ist oder abgebrochen wurde.

**12.** Verfahren nach einem der Ansprüche 1 bis 10, **dadurch gekennzeichnet, dass** der Statusbericht während der Dauer des Timers versendet wird.

**13.** Verfahren nach einem der Ansprüche 7 bis 9, **dadurch gekennzeichnet, dass** die Statusvariable für die Übermittlung der Datenpakete, die sich in der korrekten Reihenfolge befinden, an eine Protokollschicht verwendet wird, die sich über einer Protokollschicht befindet, in der die Reihenfolge hergestellt wurde.

**14.** Empfänger, der dafür geeignet ist, eine Datenübertragung in einem Kommunikationssystem mit einer in den Empfänger integrierten Empfangsentität (UE, RNC) und einer Sendeentität (RNC, UE) auszuführen, wobei die Sendeentität die Daten für die Übertragung als eine geordnete Reihenfolge von Datenpaketen bereitstellt, und wobei die Empfangsentität beim Empfang eines Datenpaketes, das sich außerhalb der Reihenfolge befindet, ein Umordnungsverfahren beginnt, um die geordnete Reihenfolge von Datenpaketen im Empfänger mittels Versenden einer Anforderung für das erneute Senden eines verlorenen Datenpaketes bereitzustellen,
**dadurch gekennzeichnet, dass**
die Empfängerentität (UE, RNC) einen Verzögerungsparameter (T_reorder) zum Verzögern des Auslösens des Umordnungsverfahrens zum Bereitstellen der Reihenfolge in dem Empfänger bei Empfang eines Datenpaketes, das sich außerhalb der Reihenfolge befindet, um die Dauer des Verzögerungsparameters aufweist, wobei ein Timer oder ein Zähler (T_reorder) für jedes Datenpaket aktiviert wird, das außerhalb der Reihenfolge eintrifft, und die Empfängerentität einen Steuerparameter (X1, X2) zum Steuern einer Herstellung der Reihenfolge der Datenpakete, die während der Dauer der Verzögerung eintreffen, aufweist.

**Revendications**

**1.** Procédé de transmission de données dans un système de communication comportant une entité de réception (UE, RNC) et une entité d'émission (RNC,UE), moyennant quoi l'entité d'émission fournit les données en vue de la transmission comme une séquence de paquets de données dans un ordre et moyennant quoi l'entité de réception à la réception d'un paquet de donnée n'étant pas dans l'ordre de séquence, démarre une procédure de réordonnancement afin de fournir la séquence de paquets de données dans l'ordre au récepteur au moyen de l'envoi d'une demande pour envoyer à nouveau un paquet de données perdu,
**caractérisé en ce que**
l'entité réceptrice (UE,NRC) à la réception d'un paquet de donnée n'étant pas dans l'ordre de séquence, retarde le déclenchement de la procédure de réordonnancement afin de fournir la séquence au récepteur au moyen d'un paramètre de retard (T_reorder) avec un temporisateur ou un compteur qui est activé pour chaque paquet de données arrivant en dehors de la séquence, moyennant quoi le déclenchement de la procédure de réordonnancement pour fournir la séquence au récepteur est retardé par la durée d'un paramètre de retard (T_reorder) et moyennant quoi un établissement de l'ordre de séquence des paquets de données entrants pendant la durée du retard est commandé au moyen d'un paramètre de commande (X1,X2).

**2.** Procédé selon la revendication 1, **caractérisé en ce que** le paramètre de retard est un temporisateur qui est démarré pour chaque paquet de données arrivant en dehors de la séquence et le déclenchement de la procédure de réordonnancement pour fournir la séquence au récepteur est retardé par la durée du temporisateur.

**3.** Procédé selon la revendication 1 ou 2, **caractérisé en ce que** le rejet des paquets de données, qui n'ont pas été reçus dans l'ordre, est retardé par le temporisateur.

**4.** Procédé selon l'une quelconque des revendications 1 à 3, **caractérisé en ce que** une demande pour une retransmission de paquets de données manquants est retardée par le temporisateur.

**5.** Procédé selon la revendication 4, **caractérisé en ce que** la demande de la retransmission des paquets de données manquants est envoyée après que le temporisateur est arrivé à expiration.

**6.** Procédé selon l'une quelconque des revendications 1 à 4, **caractérisé en ce que** le temporisateur est arrêté avant que le temporisateur arrive à expiration lorsque, à la réception d'un paquet de données, la séquence est établie.

**7.** Procédé selon l'une quelconque des revendications 1 à 6, **caractérisé en ce que** le paramètre de commande est au moins une variable d'état qui est utilisée pour garder la trace de la procédure de réordonnancement.

**8.** Procédé selon l'une quelconque des revendications 1 à 7, **caractérisé en ce que**, à la réception d'un paquet de données n'étant pas dans l'ordre de séquence et au cas où le temporisateur ne fonctionne pas, la variable d'état est déterminée au numéro de séquence maximal du paquet de données reçu.

**9.** Procédé selon l'une quelconque des revendications 1 à 8, **caractérisé en ce que**, à la réception d'un paquet de données et au cas où le temporisateur fonctionne, la variable d'état est mise à jour de telle sorte que la variable d'état indique les paquets de données jusqu'aux paquets de données qui sont dans l'ordre de séquence à partir du moment où le temporisateur a été démarré.

**10.** Procédé selon l'une quelconque des revendications 7 à 9, **caractérisé en ce que** la variable d'état est utilisée pour une génération d'un message de rapport de statut afin d'accuser la réception des paquets de données jusqu'à la variable d'état.

**11.** Procédé selon l'une quelconque des revendications 1 à 10, **caractérisé en ce que** le rapport de statut est envoyé après que le temporisateur arrive à expiration ou est annulé.

**12.** Procédé selon l'une quelconque des revendications 1 à 10, **caractérisé en ce que** le rapport de statut est envoyé pendant la durée du temporisateur.

**13.** Procédé selon l'une quelconque des revendications 7 à 9, **caractérisé en ce que** la variable d'état est utilisée pour la remise des paquets de données étant dans l'ordre de séquence correct à une couche de protocole étant située au dessus d'une couche de protocole, dans laquelle la séquence a été établie.

**14.** Récepteur adapté afin d'effectuer la transmission de données dans un système de communication comportant une entité de réception (UE,RNC) et une entité d'émission (RNC,UE), moyennant quoi l'entité d'émission fournit les données en vue de la transmission comme une séquence de paquets de données dans un ordre et moyennant quoi l'entité de réception à la réception d'un paquet de donnée n'étant pas dans l'ordre de séquence, démarre une procédure de réordonnancement afin de fournir la séquence de paquets de données dans l'ordre au récepteur au moyen de l'envoi d'une demande pour envoyer à nouveau un paquet de données perdu,
**caractérisé en ce que**
l'entité réceptrice (UE,NRC) possède un paramètre de retard (T_reorder) pour retarder le déclenchement de la procédure de réordonnancement afin de fournir la séquence au récepteur à la réception d'un paquet de données

EP 1 382 150 B1

n'étant pas dans l'ordre de séquence par la durée du paramètre de retard, moyennant quoi un temporisateur ou un compteur (T_reorder) est activé pour chaque paquet de données arrivant en dehors de la séquence et l'entité réceptrice possède un paramètre de commande (X1,X2) pour commander un établissement de l'ordre de séquence des paquets de données entrants pendant la durée du retard.

12

Figure 1

Node B          RNC

Figure 2

Figure 3

Figure 4

Figure 5

Figure 6

**Figure 7**

**Figure 8**